Europäisches Patentamt

European Patent Office

Office européen des brevets

Publication number: **0 291 085**
**A2**

# EUROPEAN PATENT APPLICATION

Application number: **88107754.9**

Date of filing: **13.05.88**

Int. Cl.4: **H02M 5/257**

Priority: **13.05.87 YU 859/87**

Date of publication of application:
**17.11.88 Bulletin 88/46**

Designated Contracting States:
**CH DE ES GB GR IT LI LU NL SE**

Applicant: **Vinko, Rogina**
**Cvijete Zuzoric 1**
**Zagreb(YU)**

Inventor: **Vinko, Rogina**
**Cvijete Zuzoric 1**
**Zagreb(YU)**

Representative: **Bauer, Robert, Dipl.-Ing. et al**
**Boeters, Bauer & Partner Patentanwälte**
**Thomas-Wimmer-Ring 14**
**D-8000 München 22(DE)**

## Impulse control of lighting, motor r.p.m., vibrational tape drive, and grid disturbance trip at reduced power consumption.

A control unit for impulse control of lighting, motor revolutions, vibrational tape operation and grid disturbance trip at reduced power consumption utilizes a combination of electronic oscillation elements and other parts. This, in the case of lighting control, results in the prevention of increased switch-on current and voltage and thereby protection of lamps from damage. The respective r.p.m. control of motors makes it possible to select and adjust the number of revolutions from O to the synchronized speed without application of the conventional capacitor with a single-phase asynchronous motor. The conventional connection of a three-phase asynchronous motor is replaced resulting in power saving up to 60 % and the possibility of smooth motor starting. Starting vibrational tapes can be effected using synchronized frequency and voltage control, which has not been feasible so far. Also, the unit enables elimination of grid disturbances (noise) to the effect that an appliance causing disturbances does not affect another appliance at the same grid. In the form of a chip the unit can be mounted on existing motors without requiring any modifications to construction.

EP 0 291 085 A2

## IMPULSE CONTROL OF LIGHTING, MOTOR R.P.M., VIBRATIONAL TAPE DRIVE, AND GRID DISTURBANCE TRIP AT REDUCED POWER CONSUMPTION

The invention relates to the area of electrical circuits and, more specifically, oscillation generation.

It solves the problem of how to handle a non-contact control of lighting intensity, the drive of a single-phase asynchronous motor with the number of revolutions varying from 0 to the synchronous speed, the activation of vibrational tapes by synchronized control of frequency and voltage, the drive of an asynchronous three-phase motor at reduced power consumption owing to elimination of reactive currents in the connection without classic capacitors, the drive of an asynchronous three-phase motor with equalized power consumption, the tripping and elimination of grid disturbances, the feeding of a transformer primary coil by means of a blocking or electrolytic condenser, the r.p.m. control of a D.C. motor using D.C. current, voltage control by means of an electrolytic condenser through a transformer with an open secondary coil, and D.C. motor revolution control through adjustment of power consumption by means of oscillation elements without operational amplifiers by using electronic units based on triacs, diacs, capacitors and variable resistors along with other elements.

Lighting intensity control is presently performed by means of contact devices involving stepwise voltage control. Elimination of radio disturbances is tried by means of magnetic cores, however, without complete success. The present invention utilizes electronic oscillation elements enabling continuous voltage variation without the possibility of radio disturbances and with decreased losses and thereby increased efficiency. The elimination of contacts results in the elimination of rapid current and voltage switch-on rises which may cause the lamps to burn out. The prior art may be considered to include Yugoslavian patent application P-791/85 concerning a triac, diac, capacitor and resistor-potentiometer of similar use; however, in this case the appliance is also equipped with a parallel connection of resistors and capacitors. The appliance is switched on through a voltage control potentiometer. When the voltage has passed the switch-on level, output power appears and the lamp lights up. Lighting intensity control is performed by the potentiometer. Decreasing the potentiometer voltage stops the oscillation generation and no output voltage occurs.

The number of revolutions of a single-phase asynchronous motor is controlled by changing the number of motor polarities resulting in a step-by-step change of the number of revolutions. Such control is also feasible by use of oscillation elements as stated in the aforementioned Yugoslavian patent application P-791/85 where a double oscillation unit is described, whereas the present version involves only one unit. This enables the variation of r.p.m. from 0 to the synchronous speed without using the classic capacitor analogous to the motors designed in series. The connection incorporates a capacitor with a capacity much lower than that of the conventional ones.

The connection of a three-phase asynchronous motor replaces the conventional one and leads to reduced power consumption and smooth putting into operation. In case of power cut in one of the phases the motor will not be damaged and can go on operating normally on two phases only and with even power consumption, as if connected to three phases. Except eliminating the danger of damage, the operational reliability is increased. No losses are involved, because the reactive currents are removed.

Vibrational tapes are presently operated by automatic transformers using a frequency of 50 Hz. Known electronic units also use the same frequency. Where the vibrational tapes are operated with here described appliance, higher frequencies can be used, which is not possible with the presently known units.

Elimination of power grid disturbances caused by voltage oscillation from an appliance interferes with the operation of other connected appliances. By using additional electronic devices according to the present invention combining triac, diac, variable resistor and capacitor means the grid disturbances and their continued spreading can be offset.

The vibration generation speed with this appliance can exceed 150 Hz and is achieved without using a metal core. The appliance operates within the range of non-stationary magnetism dealt with by Maxwell and other physicists. The same unit combination is feasible when the triac is replaced by two tyristors.

In the following, embodiments of the claimed invention are described in more detail in connection with the drawings.

Figure 1 shows the operation of a single-phase asynchronous motor with the possibility of changing the number of revolutions from 0 to the synchronous speed.

Figure 2 shows the lighting intensity non-contact control.

Figure 3 shows how a vibrational tape is moved by synchronized frequency and voltage control.

Figure 4 shows how a vibrational tape is moved by synchronized frequency and voltage control.

Figure 5 shows how a vibrational tape is moved by synchronized frequency and voltage control.

Figure 6 shows how a vibrational tape is moved by synchronized frequency and voltage control.

Figure 7 shows the operation of an asynchronous three-phase motor with reduced power consumption due to elimination of reactive currents in the connection without conventional capacitors.

Figure 8 shows the operation of an asynchronous three-phase motor with equalized power consumption and smooth putting into operation

Figure 9 shows the tripping of power grid disturbances.

Figure 10 shows the tripping of power grid disturbances.

Figure 11 shows the opening of the transformer primary by means of a block condenser.

Figure 12 shows the opening of the transformer primary by means of an electrolytic condenser.

Figure 13 shows how a DC motor driven by DC current is controlled for r.p.m.

Figure 14 shows voltage control performed by an electrolytic condenser through a transformer with the secondary opening.

Figure 15 shows how a DC motor r.p.m. is controlled.

Figure 16 shows power consumption adjustment by means of oscillation elements without operational amplifiers.

Figure 17 shows lighting control with tripping of grid disturbances and utilization of a ferrite-core capacitor.

Figure 18 shows the automatic symmetry in the grid when three-phase asynchronous motors are operated at reduced power consumption.

Figure 19 shows the lighting control with tripping of grid disturbances and utilization of a ferrite-core capacitor.

Figure 20 shows r.p.m. control of a single-phase motor driven by AC current or control of a halogenous bulb.

Figure 21 shows reduced power consumption of a three-phase asynchronous motor.

Figure 22 shows a power consumption chip externally mounted on a three-phase asynchronous motor.

Figure 23 shows a power consumption chip externally mounted on a three-phase asynchronous motor.

Figure 24 shows the increased voltage trip

Figure 25 shows the triac connection when attached to A2

Figure 26 shows the triac connection when attached to A 2

Figure 27 shows the capacitor-ferrite core connection

Figure 28 shows the capacitor-ferrite core connection

Figure 29 shows the r.p.m. control of DC-driven motor adapted to Vie and IEC standards.

Figure 30 shows the connection replacing the automatic transformer

Figure 31 shows the power consumtpion reducer installed in a single-phase asynchronous motor.

Figure 32 shows the r.p.m.control of a single-phase asynchronous motor and collector motor.

Figure 33 shows the starting and operation of single-and three-phase asynchronous motors driven by one phase only.

Figure 34 shows the r.p.m. control of a DC-driven motor and the DC power supplying unit (e.g. a battery charger).

Figure 35 shows the r.p.m. control of a DC-driven motor and the DC power supply unit (e.g. a battery charger) with a ferrite-core capacitor.

Figure 36 shows the r.p.m. control of a DC-driven motor suited to VDE and IEC standards.

Figure 37 shows the self-guiding triac.

Figure 38 shows the S-design of a varystor capacitor.

Figure 39 shows the varystor capacitor three-phase S-design.

Figure 40 shows the power consumption reducer installed in a single-phase asynchronous motor.

Figure 41 shows the chip designed for smooth starting of an asynchronous three-phase motor and the power consumption reducer.

Figure 42 shows the power consumption reducing chip used with an asynchronous three-phase motor.

Figure 43 shows the motor drive with reduced power consumption.

Figure 44 shows an impulse three-phase el. motor with an increased torque and reduced power consumption.

The units supplied with the invented device have their triac $T_1$ connected to diac $D_1$, capacitor $C_1$ and the variable resistor and potentiometer $R_1$. Thus the input partly branches in the point A to triac $T_1$ and partly to capacitor $C_1$. The triac $T_1$ receives two terminals, one from the point A, the other being connected to diac $D_1$ and on to the point B with a contact to capacitor $C_1$.

The triac $T_1$ output is linked to the point E from which one line leads to the variable resistor-potentiometer $R_1$, the other to the next connection of elements. From the point B the line proceeds to the variable resistor-potentiometer $R_1$.

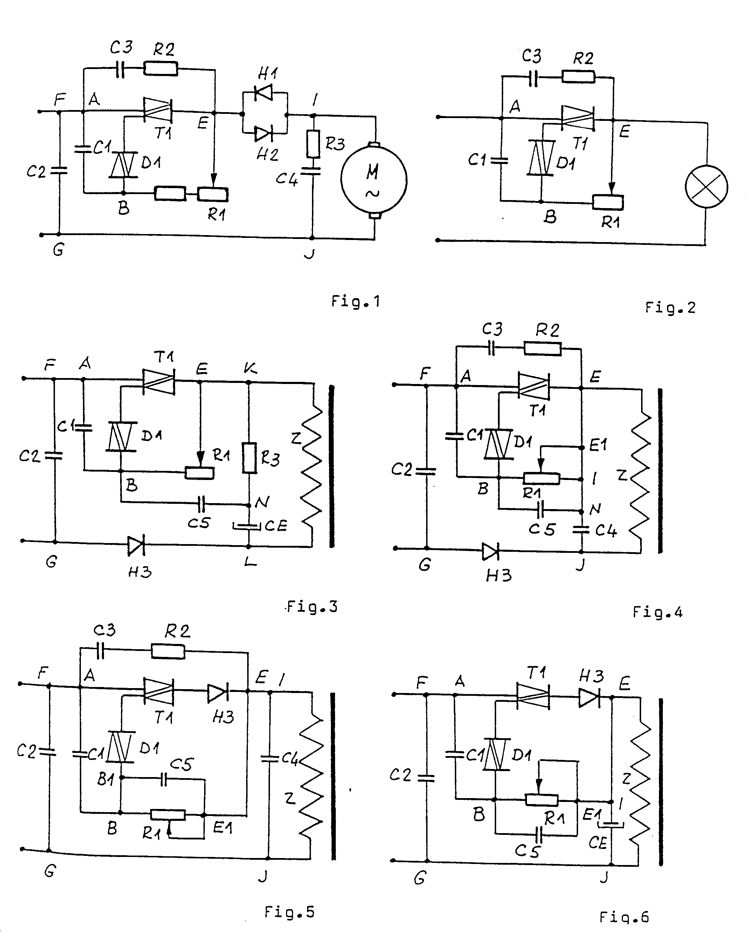

Capacitor $C_2$ is connected in the points F and G at the drive of the single-phase asynchronous motor with the possibility to change the number of revolutions from 0 to the synchronous speed (Fig.1) in front of the point A between the phases. Parallel to the $T_1$ triac connection in the points A and E is the connection of capacitor $C_3$ and resistor $R_2$. Also connected in parallel after the point E are two diodes $H_1$ and $H_2$, counter-connected, and after that between the phases in the points I and J there is the connection of resistor $R_3$ and capacitor $C_4$.

In the non-contact lighting intensity control (Fig.2), parallel to the $T_1$ triac connection in the points A and E, also connected are the capacitor $C_3$ and resistor $R_2$.

In starting the vibrational tapes through synchronous frequency and voltage control (Fig. 3) the capacitor $C_2$ is connected in the points F and G in front of the point A between the phases. The resistor $R_3$ and the electrolytic capacitor CE are connected in the points K and L behind the point E between the phases. Diode $H_3$ is connected between the points G and L. Capacitor $C_5$ is installed between the points B and N, so that the point N lies between the points K and L between the electrolytic capacitor CE and resistor $R_3$. The Z transformer winding is connected between the points K and L.

In starting the vibrational tapes with synchronized frequency and voltage control (Fig. 4) the capacitor $C_2$ is connected in the points F and G before the point A between the phases.

The capacitor $C_3$ and the resistor $R_2$ are connected parallel to the $T_1$ triac connection in the points A and E. The phases connection is carried out through a connection between E and J to the effect that the points $E_1$, I, N and the capacitor $C_4$ are on that connection. In the point $E_1$ the connection is on the variable resistor-potentiometer $R_1$. The end of the variable resistor-potentiometer $R_1$ is linked to the point 1. The capacitor $C_5$ is placed between the points B and N.

The diode $H_3$ is connected between the points G and J.

The Z-transformer winding is connected between the points E and J.

In starting the vibrational tapes with the synchronized frequency and voltage control (Fig. 5) the capacitor $C_2$ is connected before the point A between the phases in the points F and G. The capacitor $C_3$ and the resistor $R_2$ are connected in parallel to the $T_1$ triac connection in the points A and E. The connection of the cariable resistor-potentiometer $R_1$ lies between the point E and the variable resistor-potentiometer $R_1$ in the point $E_1$. The capacitor $C_5$ is connetted to the same point E.

The diode $H_3$ is installed between the T· triac and the point E, whereas the capacitor $C_4$ is placed behind the point E between the phases in the points I and J. The Z-transformer winding is connected between the points I and J.

In starting the vibrational tapes with the synchronized frequency and voltage control (Fig. 6) the capacitor $C_2$ is connected before the point A between the phases in the points F and G. The diode $H_3$ is installed between the $T_1$ triac and the point E. From the point E the phase is connected through the point I and the electrolytic capacitor CE with the point J on the other lead. The variable resistor-potentiometer $R_1$ is connected from the point I through the point $E_1$. The connection branches in the point $E_1$ to the variable resistor-potentiometer $R_1$ and the B point connection accommodating the capacitor $C_5$. The Z-transformer winding is connected between the points E and J.

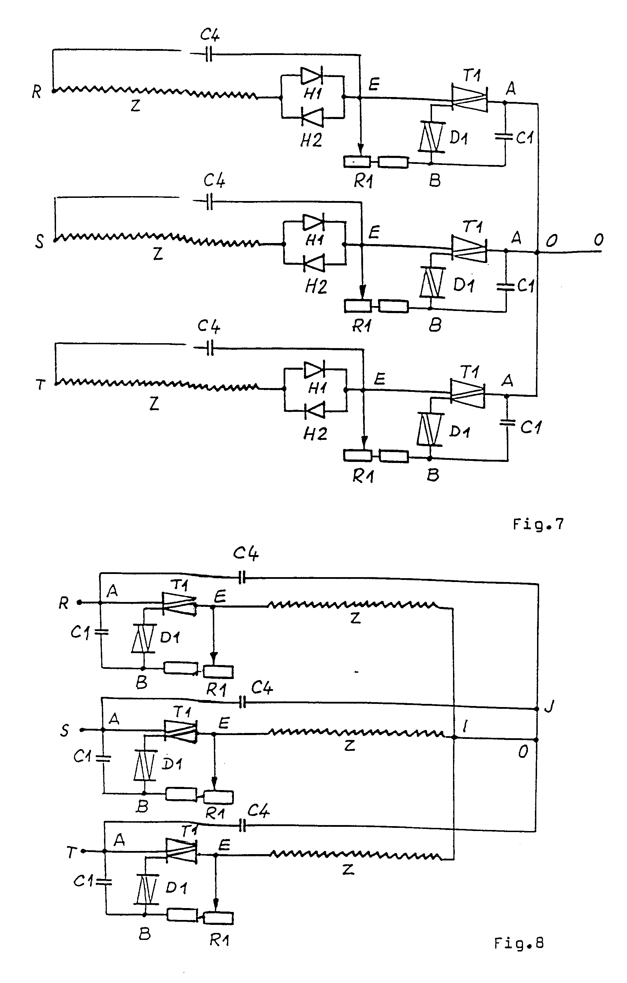

In operating the asynchronous three-phase motor at reduced power consumption owing to elimination of reactive currents in the connection without the conventional capacitor (Fig. 7), placed between the points R and O are the Z-winding, the parallel connection of two diodes $H_1$ and $H_2$, counter-connected, the point E, the $T_1$ triac, the points A and O.

Placed parallel to the Z-winding and the connection of diodes $H_1$ and $H_2$ between the points R and E is the capacitor $C_4$. The same connection is applied to other 2 phases, with the starting points being S and T.

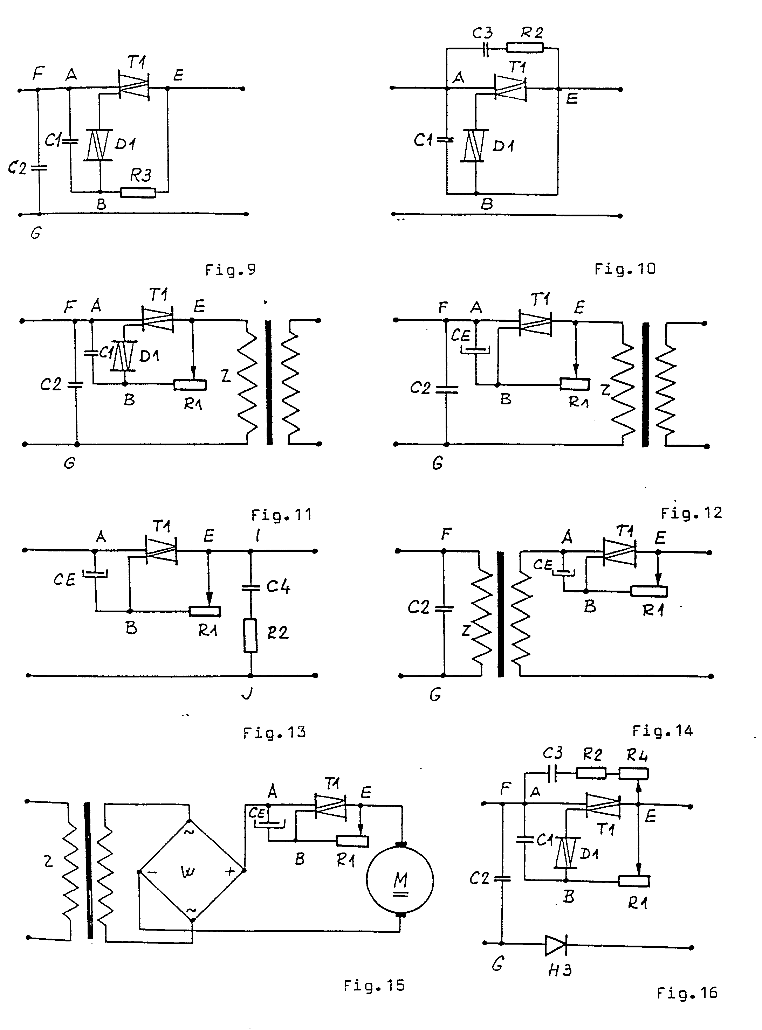

In operating the asynchronous three-phase motor with equalized power consumption and smooth starting (Fig. 8), placed between the points R and O are the point A, the $T_1$ triac, the point E, the Z-winding and the point I. The capacitor $C_4$ is connected in parallel to the $T_1$ triac, the point E and the Z-winding up to the point J , common to all three phases, and then follows the point C. The same connection is applied to other 3 phases being jointly connected in the point I after the Z-winding and in the point J behind the capacitor $C_4$.

In tripping the grid disturbances (Fig. 9), the capacitor $C_2$ is connected before the point A between the phases in the points F and G. From the point E the line leads to the $R_3$ resistor connected to the point B.

In tripping the grid disturbances (Fig. 10), the variable resistor-potentiometer $R_1$ is not installed between the points E and B. Connected parallel to the $T_1$ triac in the points A and E are the capacitor $C_3$ and the resistor $R_2$.

In opening the transformer primary by means of a block condenser (Fig. 11), the capacitor $C_2$ is connected before the point A between the phases in the points F anf G. The Z-transfomrer primary winding is placed between the points E and G.

For r.p.m. control of a DC-driven DC-motor (Fig. 13), the electrolytic capacitor CE is placed between the points A and B, whereas there is no $D_1$ diac between the $T_1$ input and the point B. The capacitor $C_4$ and the resistor $R_2$ are placed behind the point B between the leads in the points I and J.

In voltage control by means of an electrolyte through the transformer involving the secondary opening (Fig. 14), on the transformer's primary side are connected the phases in the points F and G of the capacitor $C_2$. Placed on the secondary side between the points A and B is the capacitor CE, with no $D_1$ diac between the $T_1$ input and the point B.

In r.p.m. control of a DC-motor (Fig. 15), voltage is transformed in the transformer and rectified into DC-voltage on the Gretz connection W. The electrolytic capacitor CE is located between the points A and B, with no $D_1$ diac between the $T_1$ triac input and the point B.

In adjusting power consumption through the oscillation elements without operational amplifiers (Fig. 10), the phases are connected in the points F and G of the capacitor $C_2$.

Placed parallel to the $T_1$ triac connection in the points A and E is the connection of the capacitor $C_3$, the resistor $R_2$ and the variable resistor-potentiometer $R_4$. The $H_3$ diode is located on the line behind the point C.

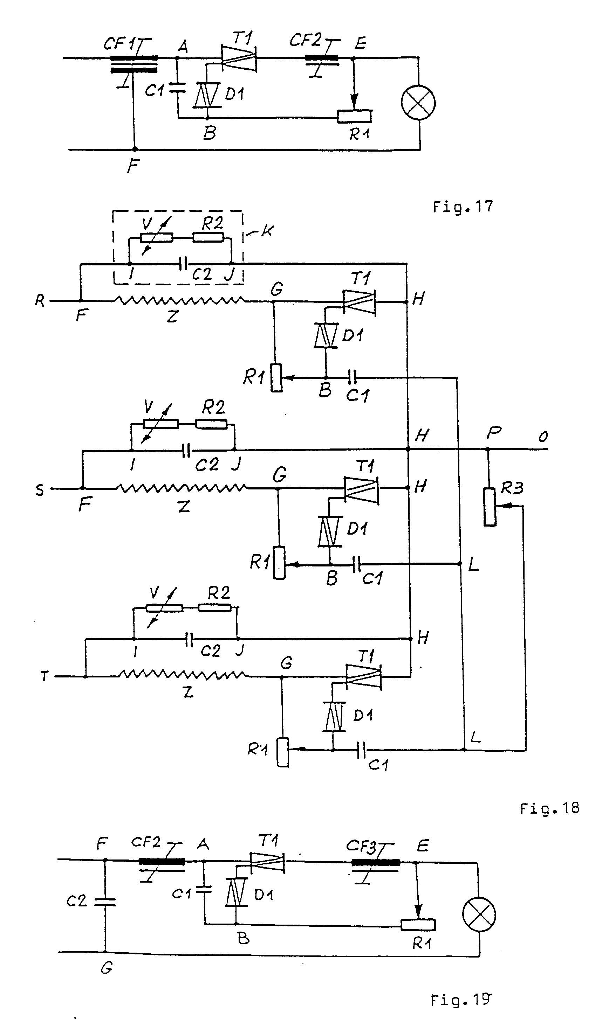

In the lighting control involving the grid disturbance trip and the ferrite-core capacitor (Fig. 17), voltage comes through the ferrite-core capacitor to the point A. The CF1 ferrite-core capacitor has an output connected to the point F. The consumer (a lamp) is located between the points E and F.

In the automatic grid symmetry with three-phase asynchronous motors at reduced power consumption (Fig. 18), the R-phase is led to the point F where it branches to the line having a parallel connection of the varystor and the resistor $R_2$ to the capacitor $C_2$ and is recollected in the point H into the line passing from the point F through the Z-winding to the point G and on to the point H through the $T_1$ triac. From the point G the other lead ends up on the variable resistor-potentiometer $R_1$. From the $T_1$ triac one input goes through the $D_1$ diac to the point B. From the point B one end leads to the variable resistor-potentiometer R1 and the other to the point L through the capacitor C1. All leads from individual phases are collected in the points H and linked to the neutral point O. In front of the point O is the point P with the variable resistor-potentiometer R3. All leads from the points L are collected and connected as the other end of the variable resistor-potentiometer R3. The part of the unit between the points I and J can be isolated by the insulation K, so that the part is made in the S-design.

In the lighting control involving the grid disturbance trip and the ferrite-core capacitor (Fig. 19), the CF2 ferrite-core capacitor is placed before the point A. Placed between the points F and G is the capacitor C2. The CF3 ferrite-core capacitor is located behind the T1 triac and in front of the point E.

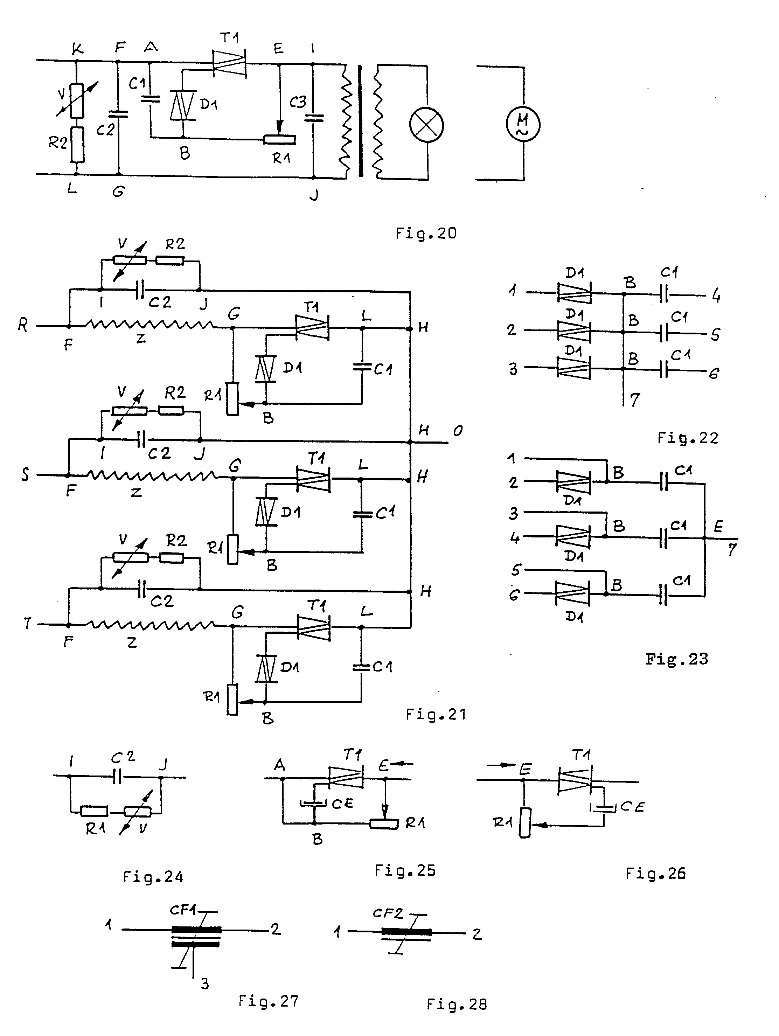

In the r.p.m. control of a single-phase DC-driven motor or in the control of halogenous bulbs (Fig. 20), the varystor V and the resistor R2 are connected between the phase and the zero-point lead in front of the point A in the points K and L, whereas connected in parallel to them is the capacitor C2 in the points F and G. A capacitor 3 can be, as required, installed behind the point E between the phase and the zero-point lead between the points I and J. Connected to the transformer's secondary side is a single-phase motor or a halogenous bulb.

In reducing the power consumption of a three-phase asynchronous motor (Fig. 21), the phase R is led to the point F where it branches to the line having between the points I and J a parallel connection of the varystor V and the resistor R to the capacitor C2 and then is collected in the point H. In the point G the other line ends up on the resistor-potentiometer R1. From the T1 triac one input goes through the diac D1 to the point B. From the point B one end goes to the variable resistor-potentiometer R1 and the other through the capacitor C1 to the point L. All leads from the points H are interconnected with the neutral point O.

In the case of the power consumption reduction chip externally installed outside the three-phase asynchronous motor (Fig. 22), the terminal is led through the D1 diac to the point B and on to the capacitor C1 to the B-point terminal. In the case of the power consumption reduction chip installed outside the three-phase asynchronous motor (Fig. 23), the terminal is led to the point B and the other terminal through the D1 diac. The capacitor C1 is placed behind the point B. Behind this capacitor all leads are connected in the point E and after that a separate terminal is taken out of the chip.

In the increased voltage trip (Fig. 24), a parallel connection of the resistor R1 and the varystor to the capacitor C2 is led between the points I and J.

In the triac connection when attached to A2 (Fig. 25) the lead branches in the point A partly to the T1 triac and the point E and partly to the point B which receives T1 triach input through the electrolytic capacitor CE and further to the variable resistor-potentiometer R1 whose other end is taken from the point E.

In the triac connection when attached to A2 (Fig. 26) the lead branches in the point E to T1 triac and the variable resistor-potentiometer R1, whereas the other T1 input is connected to the resistor-potentiometer through the electrolytic capacitor CE.

The ferrite-core capacitor (Fig 27) has its terminals 1 and 2 short-circuited and the terminal 3 is connected to the neutral point. The ferrite-core capacitor (Fig. 28) has its terminals 1 and 2 short-circuited.

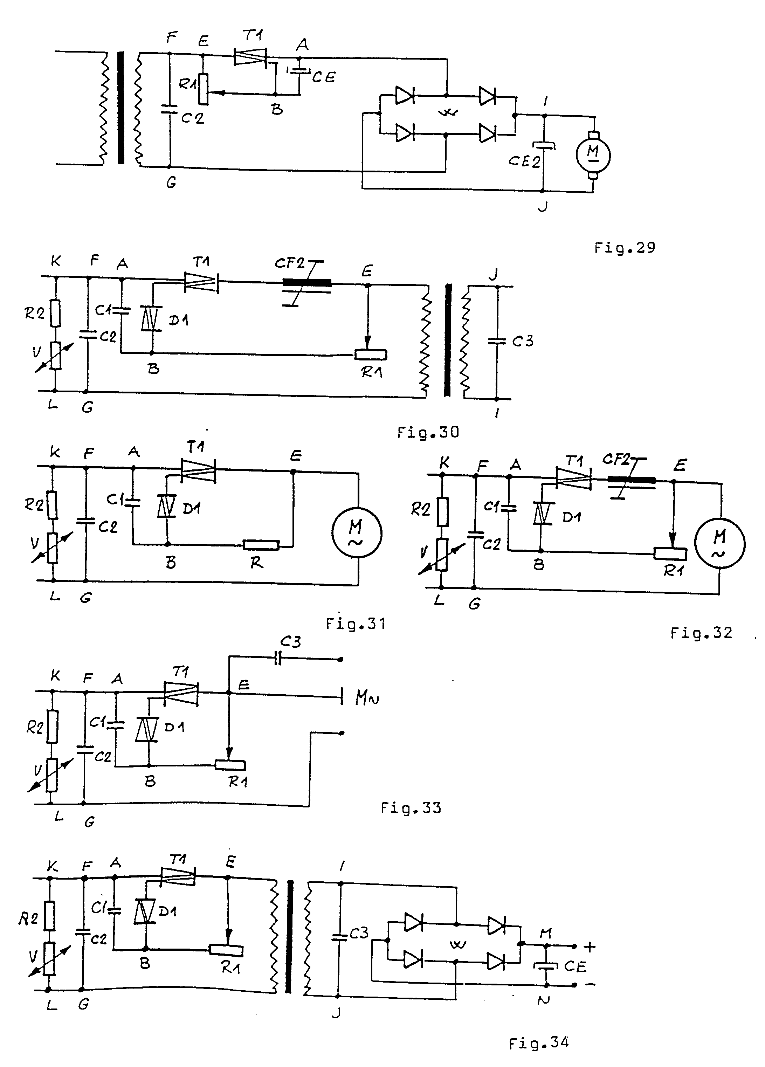

In r.p.m. control of DC-driven motors adapted to VDE and IEC standards (Fig. 29), the capacitor C2 is installed on the transformer's primary side between the windings in the points F and G. In the point E the lead branches to one going to the T1 triac and the point A and the other going to the variable resistor-potentiometer R1.

The other T1 triac lead goes to the point B. The point B is reached from the point A through the electrolytic capacitor CE and on to the variable resistor-potentiometer R1. The lines from the points A and G are led to Gretz connection W. The rectified voltage in the points I and J is linked to the electrolytic capacitor CE2 and on to the consumer (motor).

In the case of the connection replacing the auto-transformer (Fig. 30), the phase and the zero-conductor are connected in the points K and L to the resistor R2 and the varystor V and then between the points F anf G to the capacitor C2, whereas the CF2 ferrite-core capacitor is connected between the T1 triac and the point A. On the secondary side of the transformer the points I and J are connected to the capacitor C3.

In the case of the power consumption reducer installed in a single-phase asynchronous motor (Fig. 31), the phase and the zero-conductor are connected in the points K and L with the resistor R2 and the varystor V and then with the capacitor C2 between the points F and G. The resistor R is placed between the points B and E.

In r.p.m. control of a single-phase asynchronous motor and a collector motor (Fig. 32) the phase and the zero-conductor are connected in the points K and L to the resistor R2 and the varystor V, then to the capacitor C2 between the points F and G, whereas the ferrite-core capacitor CF2 is connected between the T1 triac and the point E.

In starting and operating single-and three-phase asynchronous motors by one phase only (Fig. 33), the resistor R2 and the varystor V are placed between the phases and the zero-conductor in the points K and L and the capacitor C2 between the points F and G. In the point E one terminal is led through the capacitor C3, the second terminal from the point E and the third one from the point G.

In r.p.m. control of a DC-driven motor involving a DC-generator (e.g. a battery charger) (Fig. 34), the resistor R2 and the varystor V are placed between the phase and the zero-conductor in the points K and L, the capacitor C2 between the points F and G, the capacitor C3 on the transformer's secondary side in the points I and J, and the electrolytic capacitor CE after Gretz connection W between the negative and positive poles in the points M and N.

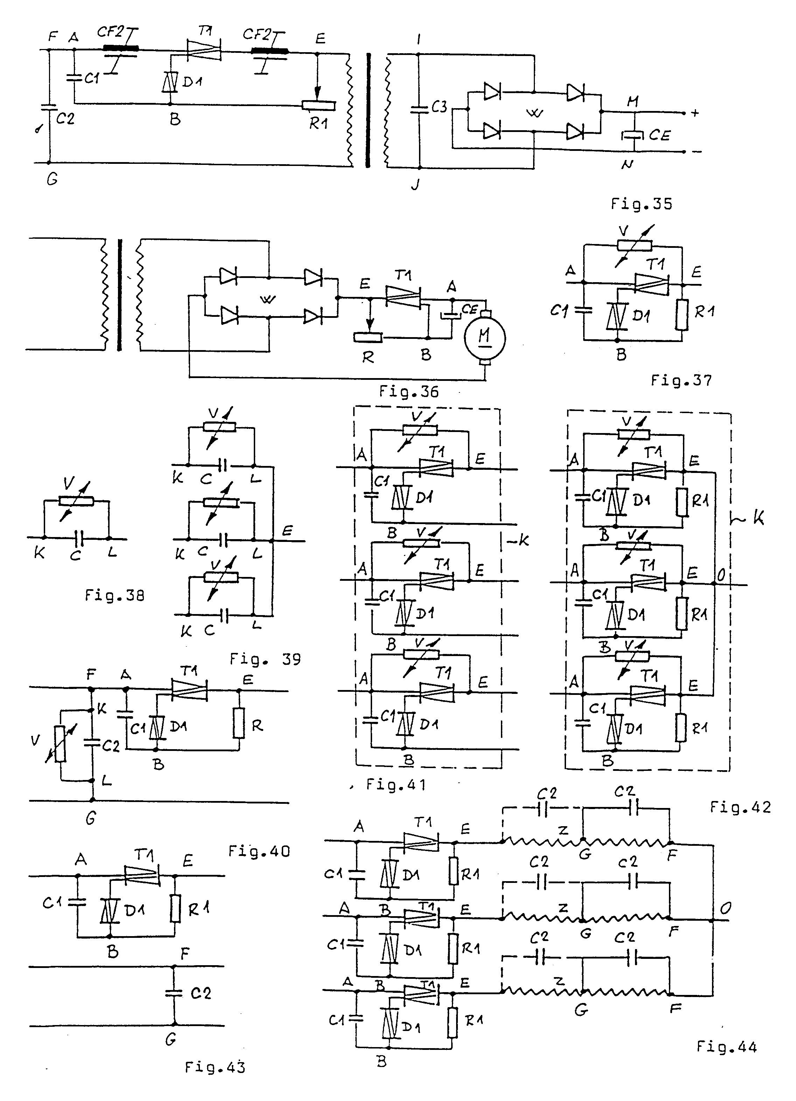

In r.p.m. control of a DC-driven motor involving DC-voltage supply with the ferrite-core capacitor (Fig. 35), the resistor R2 is placed between the phase and the zero-conductor in the points K and L, and so is the varystor, whereas the capacitor C 2 is placed between between the points F and G. The CF2 ferrite-core capacitor is installed between the point A and the T1 triac. The capacitor C3 is place behind the transformer's seocndary winding between the points I and J. The CE electrolytic capacitor is located after Gretz connection between the negative and positive voltage poles in the points H and N.

In r.p.m. control of a DC-driven motor adapted to VDE and IEC standards (Fig. 36), on the transformer's secondary side behind Gretz connection W one line is led through point E of the T1 triac and the point A to the motor, whereas the other line from E is led to the variable resistor-potentiometer R. The other line from the variable resistor-potentiometer R is led to the point B where it is connected to the T1 triac output and proceeds to the point A through the electrolytic capacitor CE.

In the case of the self-guiding triac (Fig. 37), the varystor V is connected in parallel in the points A and E.

In the case of the S-designed varystor-equipped capacitor (Fig. 38), the varystor V is connected in parallel to the capacitor C in the points K and L.

In the case of the S-designed three-phase varystor-equipped capacitor (Fig. 39), the varystor V is connected in parallel to the capacitor C in the points K and L; 3 such units are connected from the point L to the zero-conductor E-point.

In the case of the power consumption reduced installed in a single-phase asynchronous motor (Fig. 40), the capacitor C2 is connected before the point A between the phase and the zero-conductor in the points P and G, and connected in parallel in this connection in the points K and L to the capacitor is the varystor V.

In the case of the chip-controlled smooth starting of an asynchronous three-phase motor involving reduced power consumption (Fig.41), the phase is led in the point A to the T1 triac and through the point E outside the chip. Connected in parallel in the points A and E to the T1 triac is the varystor V. In the point A the other lead is connected through the capacitor C1 to the point B which receives the other T1 triac input through the D1 diac leaving the chip behind the point B. The chip involves three separate units of this kind. The whole unit is enclosed in the casing K.

In the case of the power consumption reducing chip used in the operation of an asynchronous three-phase motor (Fig. 42), the phase in the point A is led to the T1 triac and the point E. Connected in parallel in the points A and E to the T1 triac is the varystor V. The other lead in the point A is connected through the capacitor C1 to the point B which receives the other T1 triac input through the D1 diac and then the line is led behind the point B through the resistor R1 to the point E. The lines from the point E are linked in the point O and led out of the chip. The whole unit is enclosed in the casing K.

In operating the motor at reduced power consumption (Fig. 43), the phase is led through the point A, T1 triac and the point E. In the point A the other lead is connected through the capacitor C1 to the point B receiving the other T1 triac input through the D1 diac; the line is led from the point B through the resistor R1 on to the point E. The second and third phases are connected in the points F and G through the capacitor C2.

In the case of the three-phase el. motor involving an increased torque and reduced power consumption (Fig. 44), the phase is led to the point A and on to the point E through the T1 triac. the other line from the point A is led through the capacitor C1 to the point B which receives the other T1 triac input through the D1 diac; from the point B the line is led through the resistor R1 to the point E. Behind the point E the line is led to the winding Z and then all three lines to the point O. Placed parallel to the winding Z in the points F and G is the capacitor C2. The capacitor C2 can be placed in parallel to the front or rear part of the winding Z.

The disclosure includes the English translation of the priority document.

## Claims

1. A control unit for impulse control of lighting, motor r.p.m., vibrational tape operation and grid disturbance trip at reduced power consumption, comprising triac, diac, capacitor and variable resistor means, whereby one branch line leads from a point A to a triac (T1) and another branch line to a capacitor (C1) whereas the other triac (T1) input is connected to a diac (D1) also connected, at a point B, to said capacitor (C1), and the triac (T1) output is connected to a point E which is also connected through a variable resistor (R1) to point B.

2. The unit of claim 1 in the form of a single-phase asynchronous motor operation unit with a possibility of changing the number of revolutions from zero to the synchronous speed, wherein a capacitor (C2) is connected between the phases before point A, and, connected in parallel to the triac (T1) between points A and E, are a capacitor (C3) and a resistor (R2), whereas behind point E there is a parallel connection of two counter-connected diodes (H1, H2) and thereafter, between the phases, a resistor (R3) and a capacitor (C4) are connected to points I and J (Fig. 1).

3. The unit of claim 1 in the form of a lighting intensity control unit, wherein a series connection of a capacitor (C3) and a resistor (R2) is connected in parallel to the triac (T1) (Fig. 2).

4. The unit of claim 1 in the form of a vibrational tape starter with synchronized frequency and voltage control, wherein a capacitor (C2) is connected between the phases at points F and G before point A, a resistor (R3) and an electrolytic capacitor (CE) are connected between the phases at points K and L behind point E, a diode (H3) is connected between points G and L, and a capacitor (C5) is connected between points B and N, point N being located between the last mentioned resistor (R3) and the electrolytic capacitor (CE) (Fig. 3).

5. The unit of claim 1 in the form of a vibrational tape starter with synchronized frequency and voltage control, wherein a capacitor (C2) is connected between the phases at points F and G before point A, a capacitor (C3) and a resistor (R2) are connected in parallel to a triac (T1) between points A and E, a diode (H3) is provided in the respective conductor between points G and J, a capacitor (C4) is connected between points E and J, a capacitor (C5) is connected between points B and N, and the variable resistor (R1) is connected to points B and I, the points N and I being connected to point E (Fig. 4).

6. The unit of claim 1 in the form of a vibrational tape starter with synchronized frequency and voltage control, wherein a capacitor (C2) is connected between the phases at points F and G before point A, a diode (H3) is connected in series with the triac (T1) between points A and E, a capacitor (C3) and a resistor (R2) are connected in parallel thereto between points A and E, a capacitor (C4) is connected between the phases behind point E at points I and J, the variable resistor (R1) is connected to point E, and a capacitor (C5) is connected to points B and E (Fig. 5).

7. The unit of claim 1 in the form a vibrational tape starter with synchronized frequency and voltage control, whereby a capacitor (C2) is connected between the phases at point F and G before point A, a diode (H3) is connected in series to the triac (T1), an electrolytic capacitor (CE) is connected between points E and J, the variable resistor (R1) is connected to a point I between point E and the electrolytic capacitor (CE), and a capacitor (C5) is connected in parallel to the variable resistor (R1) between points B and E (Fig. 6).

8. The unit of claim 1 in the form of an asynchronous three-phase motor operation unit involving reduced power consumption owing to elimination of reactive currents in a circuit dispensing with the conventional capacitor, wherein a winding (Z), a parallel connection of two counter-connected diodes (H1, H2), and the triac (T1) between points A and E are connected between points R and O, a capacitor (C4) being connected in parallel to the winding (Z) and the diodes (H1, H2), and the same arrangement is provided for the two remaining phases (Fig. 7).

9. The unit of claim 1 in the form of an asynchronous three-phase motor operation unit effecting equalized power consumption and smooth starting, wherein the triac (T1) between points A and E, and a winding (Z) following point E are connected between points R and O, and a capacitor (C4) is connected in parallel to these elements between points A and J, and the same arrangement is provided for the two remaining phases, point J being a knot point of either the windings (Z) and the capacitors (C4) (Fig. 8).

10. The unit of claim 1 in the form of a grid disturbance trip unit, wherein the variable resistor (R1) is replaced by a fixed resistor (R3) one end of which is connected to point E, and that a capacitor (C2) is connected between the phases at points F and G before point A (Fig. 9).

11. The unit of claim 1 in the form of a grid disturbance trip unit, wherein instead through a variable resistor (R1) points B and E are connected directly, and, connected in parallel to the triac (T1) between points A and E, are a capacitor (C3) and a resistor (R2) (Fig. 10).

12. The unit of claim 1 in the form of a capacitor unit for opening a transformer's primary, wherein a capacitor (C2) is connected between the phases at points F and G before point A (Fig. 11).

13. The unit of claim 12 in the form of an electrolytic capacitor unit, wherein, instead of the diac (D1) between the triac (T1) input and point B and the capacitor (C1) between points A and B, an electrolytic capacitor (CE) is connected between points A and B (Fig. 12).

14. The unit of claim 1 in the form of a r.p.m. control unit for DC-driven DC motors, wherein, instead of a diac (D1) between the triac (T1) input and point B and the capacitor (C1) between points A and B, an electroclytic capacitor (CE) is connected between points A and B and a capacitor (C4) and resistor (R2) are connected between the phases at points I and J behind point E (Fig. 13).

15. The unit of claim 1 in the form of a voltage control unit using an electrolytic capacitor (CE) and fed through the secondary of an opening transformer, wherein a capacitor (C2) is provided at the transformer's primary side between points F and G and, on the transformer's secondary side, instead of the diac (D1) between the triac (T1) input and point B and the capacitor (C1) between points A and B, an electrolytic capacitor (CE) is connected to the points A and B (Fig. 14).

16. The unit of claim 1 in the form of a DC motor r.p.m. control unit, wherein, instead of the diac (D1) between the triac (T1) input and point B and the capacitor (C1) between the points A and B an electrolytic capacitor (CE) is connected to the points A and B (Fig. 15).

17. The unit of claim 1 in the form of a power consumption adjustment unit using oscillation elements without operational amplifiers, wherein a capacitor (C2) is connected between the phases at points F and G before point A, a diode (H3) is provided in the respective conductor behind point G, and a capacitor (C3), a resistor (R2) and a variable resistor (R4) are connected in parallel to the triac (T1) between the points A and E (Fig. 16).

18. The unit of claim 1 in the form of a lighting control unit effecting grid disturbance trip and ferrite core capacitor means, wherein the ferrite core capacitor (CF2) is short-circuited between the triac (T1) and knot point E, another ferrite core capacitor (CF1) is short-circuited to the phase before point A, and its output is connected to the neutral lead of point F (Fig. 17).

19. The unit of claim 1 as an automatic grid symmetry unit for operation of three-phase asynchronous motors at reduced power consumption, wherein each phase branches at a point F to a lead including, between point I and J, a series connection of a varystor (V) and resistor (R2) in parallel connection to a capacitor (C2), and, in point H, joins with the other branch from point F that includes a winding (Z) and a unit in accordance with claim 1, all the leads from the individual phases join in a knot point H connected to the zero-lead (O), whereas a point P of the zero-lead (O) is connected through a varyable resistor (R3) with another lead from a knot point L itself connected to the capacitor (C1) of each of the claim 1 units (Fig. 18).

20. The unit of claim 19, wherein the part between the points I and J is insulated in a way that meets the S-design requirements.

21. The unit of claim 1 in the form of a lighting control unit effecting grid disturbance trip and including ferrite core capacitor means, wherein a ferrite core capacitor (CF3) is short-circuited between the triac (T1) and a point E, another ferrite core capacitor (CF2) is short-circuited before point A, and a capacitor (C2) is connected between the phase and zero leads at points F and G (Fig. 19).

22. The unit of claim 1 in the form of a r.p.m. control unit of a single-phase AC motor or a control unit for halogen lamp control, wherein a varystor (V) and a resistor (R2) are connected between the phase and the zero-lead at points K and L in parallel to a capacitor (C2) between points F and G, and a capacitor (C3) is connected between points I and J at the output of the circuit means of claim 1 (Fig. 20).

23. The unit of claim 19 as a power consumption reducing unit for three-phase asynchronous motors, wherein point L is connected to point H directly, without the variable resistor (R3) (Fig. 21).

24. A chip-designed power consumption reduction unit for a three-phase asynchronous motor with the chip installed outside, wherein the phases are led through diacs (D1) to a common knot point B followed by capacitors (C1) (Fig. 22).

25. A chip-designed power saving unit for a three-phase asynchronous motor having the chip installed outside, wherein the phases are each led through a diac (D1) to a knot point B, there branching, and one branch is connected to a common knot point E through a capacitor (C1) each (Fig. 23).

26. A triac unit, wherein, from a knot point A, one line leads through a triac (T1) to a knot point E and another one from point A to a point B connected to the other triac (T1) input through an electrolytic capacitor (CE), and to a variable resistor (R1) also connected to the remaining terminal, point E, of the triac (T1) (Fig. 25).

27. A triac unit wherein, from a knot point E, one line leads to a triac (T1) and another one to a variable resistor (R1) which is also connected to the other triac (T1) input through an electrolytic capacitor (CE) (Fig. 26).

28. The unit of claim 15 as a DC motor r.p.m. control unit, adapted to VDE and IEC standards, wherein the capacitor (C2) is connected between points F and G and an electrolytic capacitor (CE2) is provided behind a Graetz circuit (W) between points I and J (Fig. 29).

29. The unit of claim 22 to replace an autotransformer, wherein a capacitor (C3) is connected between the output terminal - points I and J - of the transformer's secondary (Fig. 30).

30. The unit of claim 22 in the form of a r.p.m. control unit for single-phase asynchronous motors and collector motors, wherein a ferrite core capacitor (CF2) is connected between the triac (T1) and knot point E (Fig. 32).

31. The unit of claim 22 as a starting and operating unit for single-and three-phase asynchronous motors driven by one phase only, wherein the capacitor (C3) is located behind the knot point E (Fig. 33).

32. The unit of claim 22 as a r.p.m. control unit for DC-driven motors and DC power generation, wherein the capacitor (C3) between the points I and J is shifted from the transformer's primary to its secondary side, and the electrolytic capacitor (CE) is provided behind a Graetz circuit (W) between points M and N (Fig. 34).

33. The unit of claim 32, wherein two ferrite core capacitors (CF2) are provided between point A and the triac (T1) and between the triac (T1) and point E, respectively (Fig. 35).

34. The unit of claim 15 as a r.p.m. control unit for DC-driven motors adapted to VDE and IEC standards, wherein the whole unit is connected to the positive pole and turned by 180°.

35. The unit of claim 1, wherein a varystor (V) is connected in parallel to the points A and E (Fig. 37).

36. A capacitor-and varystor-fitted unit, wherein the varystor (V) and the capacitor (C) are connected in parallel between points K and L (Fig. 38).

37. A three-phase capacitor-and varystor-fitted unit, wherein the different points L are interconnected at a knot point E (Fig. 39).

38. The unit of claim 1 in the form of a power saving unit for a single-phase asynchronous motor, and including the unit of claim 36, wherein the capacitor (C2) and varystor (V) are connected between points F and G before point A (Fig. 40).

39. The unit of claim 1 in the form of a chip-designed unit for smooth starting of asynchronous three-phase motors and power saving, wherein a varystor (V) is connected in parallel to the triac (T1) between the points A and E, and from point B a line leads outside the unit which is itself enclosed in an insulated casing (K) (Fig. 41).

40. The unit of claim 1 in the form of a chip-designed power saving unit for operation of asynchronous three-phase motors, wherein a varystor (V) is connected in parallel to the triac (T1) between each of the points A and E and the points E are interconnected at a point O to a line leading outside the unit which is itself enclosed in an insulated casing (K) (Fig. 42).

41. The unit of claim 1 in the form of a motor operation power saving unit, wherein phases not provided with units in accordance with claim 1 are interconnected between points F and G by a capacitor (C2) (Fig. 43).

42. The unit of claim 1 in the form of a three-phase impulse electric motor with increased torque and decreased power consumption, wherein each winding (Z) is connected at points G and F to a capacitor (C2), points G and F being located at the front or rear end of the winding (Z), and the rear ends of the windings (Z) are interconnected at a point O (Fig. 44).

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

Fig.16

0 291 085

Fig. 17

Fig. 18

Fig. 19

Fig.20

Fig.21

Fig.22

Fig.23

Fig.24

Fig.25

Fig.26

Fig.27

Fig.28

Fig.29

Fig.30

Fig.31

Fig.32

Fig.33

Fig.34

# 0 291 085

Fig.35

Fig.36

Fig.37

Fig.38

Fig. 39

Fig.40

Fig.41

Fig.42

Fig.43

Fig.44